Europäisches Patentamt

European Patent Office

Office européen des brevets

(19)

(11) EP 0 561 917 B1

## (12) EUROPÄISCHE PATENTSCHRIFT

(45) Veröffentlichungstag und Bekanntmachung des Hinweises auf die Patenterteilung:
**29.10.1997  Patentblatt 1997/44**

(21) Anmeldenummer: **92900852.2**

(22) Anmeldetag: **11.12.1991**

(51) Int Cl.⁶: **H04H 1/00**, H04L 1/00, H04L 7/04

(86) Internationale Anmeldenummer:
**PCT/EP91/02375**

(87) Internationale Veröffentlichungsnummer:
**WO 92/10888 (25.06.1992 Gazette 1992/14)**

(54) **VERFAHREN ZUM ÜBERTRAGEN VON ZUSATZINFORMATIONEN IN EINEM AM-RUNDFUNKSIGNAL**

PROCESS FOR TRANSMITTING ADDITIONAL INFORMATION WITH AN A.M. RADIO SIGNAL

PROCEDE DE TRANSMISSION D'INFORMATIONS SUPPLEMENTAIRES AVEC UN SIGNAL RADIO A AMPLITUDE MODULEE

(84) Benannte Vertragsstaaten:
**AT BE CH DE DK ES FR GB IT LI LU NL SE**

(30) Priorität: **12.12.1990  DE 4039673**

(43) Veröffentlichungstag der Anmeldung:
**29.09.1993  Patentblatt 1993/39**

(73) Patentinhaber: **Thomson Consumer Electronics Sales GmbH**
**30453 Hannover (DE)**

(72) Erfinder: **SCHWAIGER, Karl-Heinz**
**D-8045 Ismaning (DE)**

(56) Entgegenhaltungen:
**US-A- 4 271 520**

- **RUNDFUNKTECHNISCHE MITTEILUNGEN, Bd. 33, Nr. 5, September 1989, NORDERSTEDT, DE, SS 214-226; RAUFMANN B. ET AL.: 'FELDVERSUCHE ZUR ÜBERTRAGUNG VON ZUSATZINFORMATIONEN ÜBER AM-SENDER'**
- **ELECTRONICS LETTERS, Bd. 19, Nr. 3, 3. Februar 1983, ENAGE, GB, SS 109-110; ELY S.R. ET AL.: 'HIGH-SPEED DECODING TECHNIQUE FOR SLIP DETECTION IN DATA TRANSMISSION SYSTEMS USING MODIFIED CYCLIC BLOCK CODES'**
- **LUCKY R.W., SALZ J., WELDON E.J. JR.: 'PRINCIPLES OF DATA COMMUNICATION' 1968, MCGRAW-HILL BOOK COMPANY, NEW YORK, pp 366-368**
- **FUNKSCHAU, Bd. 62, Nr. 9, 20. April 1990, München, DE, SS 48-51; DEUTSCHER R.: 'Daten neben dem Hörfunk'**
- **FUNKSCHAU, Bd. 58, Nr. 1, Januar 1986, München, DE: 'Radio-Daten-System: Neue Entwicklung auf Hörfunkwellen'**
- **First Vehicle Navigation & Information Systems Conference Record; Toronto, Canada, 11-13 September, 1989; Seiten A44-A48; Davies P.: " The Radio System- Traffic Channel"**

**Beschreibung**

Die Erfindung bezieht sich auf ein Verfahren zum Übertragen von Zusatzinformationen in einem AM-Rundfunksignal, bei dem empfangsseitig das AM-Rundfunksignal demoduliert, das gewonnene Zusatzinformationssignal decodiert und die decodierte Zusatzinformation für Abstimmungs-, Schalt-, Speicher und/oder Wiedergabezwecke verwendet wird, sowie auf ein Signal zur Übertragung dieser Zusatzinformationen sowie auf einen Empfänger zum Empfang dieses Signals.

Es ist aus "Funkschau" 1986, Heft 1, Seite 43 - 47 bekannt, in einem AM-Rundfunksignal digitale, codierte Zusatzinformationssignale durch Phasenmodulation und - demodulation des AM-Signalträgers zu übertragen sowie in einem FM-Rundfunksignal Zusatzinformationen entsprechend dem Radio-Daten-System auf eine zyklisch wiederholte Anzahl von Gruppen aufzuteilen, wobei pro Gruppe ein oder mehrere Informationsblöcke vorgesehen sind, die jeweils aus einem Informationswort und einem Kontrollwort bestehen. Ferner ist aus dem Forschungsbericht BBC RD 1982/2 der Britisch Broadcasting Coperation "L.F. Radio-Data: Specification of the BBC experimental transmissions 1982" vom August 1982 bekannt, in einem AM- (Amplituden-Modulations-)-Rundfunksignal digitale, codierte Zusatz informationen durch Phasenmodulation und -demodulation des AM-Rundfunksignalträgers zu übertragen. Um das Programmsignal des phasenmodulierten AM-Trägers nicht zu stören, wurde von der British Broadcasting Coperation als maximal zulässiger Phasenhub ein Wert von $\pm$ 22,5° gewählt, was einer Übertragungskapazität für die Zusatz informationen von 25 bit/s entsprach. Diese äußerst geringe Kanalkapazität erfordert einen Fehlerschutz, welcher möglichst optimal im Sinne einer geringen Redundanz an die Eigenschaften des AM-Rundfunkübertragungskanals angepaßt ist. Hierzu wird der Datenstrom in Blöcke mit einer Länge von je 50 bit unterteilt, wobei jeder Block aus einem Synchronbit, einem Informationswort von 36 bit und einem Prüfwort von 13 bit besteht. Für die Blockcodierung wird ein optimal fehlerkorrigierender Code verwendet, mit welchem ein Fehlerbündel bis zu einer Länge von 6 bit korrigiert werden kann. Der gewählte Code ist zyklisch, welcher auf die Blocklänge von 50 bit gekürzt ist. Um den Blockanfang sicher erkennen zu können, wird senderseitig dem Block das Synchronbit vorgesetzt, wodurch der zyklische Charakter des Blockcodes zerstört wird. Um den Inhalt des 32 bit-langen Informationswortes zu identifizieren, wird am Anfang des Informationswortes unmittelbar hinter dem Synchronbit ein 4-bit-breiter Blockanwendungscode übertragen. Innerhalb des Informationswortes ist nur für die Information über Uhrzeit und Kalenderdatum eine spezielle Informationscodierung in Verbindung mit dem Blockanwendungscode 0000 vorgesehen.

Demgegenüber besteht die Aufgabe der Erfindung darin, bei einem Zusatzinformationssignal der eingangs erwähnten Art die Redundanz zu verringern sowie die Zuordnung und damit Erkennung von verschiedenen Informationen zu erleichtern.

Diese Aufgabe wird erfindungsgemäß durch die kennzeichnenden Merkmale des Patentanspruchs 1 gelöst.

**1. Basisbandcodierung**

**1.1 Struktur der Basisbandcodierung**

Bild 1 zeigt die Struktur der Basisbandcodierung. Das größte Element innerhalb der Struktur wird Gruppe genannt. Eine Gruppe besteht aus 2 Blöcken mit je 47 Bit. Jeder Block enthält ein Informationswort (36 Bit) und ein Prüfwort (11 Bit). Zur Unterscheidung der Blöcke einer Gruppe und zur sicheren Blocksynchronisation wird jedem Prüfwort ein Offsetwort (11 Bit) überlagert (Modulo-2-Addition).

```
            |<-- Gruppe = 2 Blöcke = 94 Bit  -->|
            |                                    |
            | ------------------  ------------------ |
            |      Block 1             Block 2    |
            | ------------------  ------------------ |
            |

                  <------- Block = 47 Bit -------->

                  ------------------  ------------------
                    Informationswort      Prüfwort
                  ------------------  ------------------
                                          mit Offset

        <----- 36 Bit ----->          <----- 11 Bit ----->

        ---|---|- -|---|---          ---|---|- -|---|---
        m35|m34| - - |m1| m0         c10| c9| - - |c1| c0
        ---|---|- -|---|---          ---|---|- -|---|---
```

Bild 1    Struktur der Basisbandcodierung

## 1.2 Merkmale der Datenübertragung

Bei allen Informationswörtern, Prüfwörtern, binären Zahlen oder Adressen wird das höchstwertige Bit zuerst übertragen (Bild 2). Das zuletzt übertragene Bit einer binären Zahl oder Adresse besitzt die Wertigkeit $2^0$.

Die Datenübertragung ist vollkommen synchron, d.h. es gibt keine Lücken zwischen Gruppen oder Blöcken.

```
|<---------------------------- Gruppe ---------------------------->|
|                                                                  |
|<---------- Block 1 ---------->|<---------- Block 2 ---------->|
|  zuerst übertragenes Bit      |   zuletzt übertragenes Bit    |
|  ↓                            |                            ↓  |
| ----|--------|-- -|--------|---- |-- ----------|--------|
| GT | PI-Code |-- -| Prüfwort | GT |-- ----------| Prüfwort |
| ----|--------|-- -|--------|---- |-- ----------|--------|
|                    Offsetw.A|                    Offsetw.B

                     Gruppentypcode

    höchstwertiges Bit      geringstwertiges Bit

                 ----|----|----|----
                  A3 | A2 | A1 | A0
                 ----|----|----|----
```

Bild 2    Datenformat und Adressierung

| Erläuterungen | | | |
|---|---|---|---|
| GT | Gruppentypcode | ( 4 Bit) | s. 2.2 |
| PI-Code | Programmkettenkennung | (16 Bit) | s. 2.1 |
| Prüfwort | für Fehlerschutz, Block- und Gruppensynchronisation | (11 Bit) | s. 1.3 |
| X | nicht benutzte Kapazität | s. 2.2.1 - 2.2.5 | |

Block 1 jeder einzelnen Gruppe wird zuerst übertragen.

## 1.3 Fehlerschutz

Zur Erkennung und Korrektur von Übertragungsfehlern im Empfänger/Decoder besitzt jeder Block ein Prüfwort (11 Bit). Dieses Prüfwort ($c_{10}$, $c_9$, ... ,$c_0$ in Bild 1) ist die Summe (modulo 2) von:

a) Rest nach Multiplikation des 36Bit-Informationswortes $m(x)$ mit $x^{11}$ und anschließender Division (modulo 2) durch das Generatorpolynom $g(x)$
und
b) einer 11Bit-Binärfolge $d(x)$, genannt Offsetwort bzw.

$$\text{Prüfwort} \quad c(x) = d(x) + \left. \frac{m(x) \; x^{11}}{g(x)} \right| \mod g(x)$$

wobei das Generatorpolynom (Grad 11) durch folgende Gleichung beschrieben wird:

$$g(x) = x^{11} + x^8 + x^6 + 1$$

und für jeden Block innerhalb einer Gruppe unterschiedliche Offsetwörter verwendet werden.
Die 11Bit-Binärfolge für die Offsetwörter A und B ist wie folgt definiert:

| Offset | Offsetwort $d(x)$ | | | | | | | | | | |
|---|---|---|---|---|---|---|---|---|---|---|---|
| | $d_{10}$ | $d_9$ | $d_8$ | $d_7$ | $d_6$ | $d_5$ | $d_4$ | $d_3$ | $d_2$ | $d_1$ | $d_0$ |
| A | 0 | 1 | 0 | 1 | 1 | 0 | 1 | 0 | 1 | 0 | 1 |
| B | 1 | 0 | 1 | 1 | 0 | 1 | 0 | 1 | 0 | 1 | 1 |

Der Fehlerschutz-Code besitzt folgende Eigenschaften:

- Erkennt alle Einzel- und Doppelfehler in einem Block
- Erkennt jedes einzelne Fehlerbündel bis zu 11 Bit
- Erkennt ungefähr 99,90% der Fehlerbündel mit 11 Bits und etwa 99,95% aller längeren Bündel

Der Code ist auch ein optimaler fehlerkorrigierender Code für Fehlerbündel bis zu einer Länge von 5 Bit. Empfangsseitig kann abhängig von der Anzahl der Fehler eines Blocks oder vom Blockinhalt entweder die Fehlererkennung oder die Fehlerkorrektur oder auch beides angewendet werden.

## 1.4 Block- und Gruppensynchronisation

Durch die Verwendung der beiden Offsetwörter A und B können sowohl Anfang und Ende eines Blocks als auch Anfang und Ende einer Gruppe im Empfänger erkannt werden. Die Offsetwörter zerstören die zyklische Natur des ursprünglichen Codes, so daß zyklische Verschiebungen von Codewörtern des modifizerten Codes keine anderen Codewörter entstehen lassen und somit diese Art der Blocksynchronisation zuverlässig machen.

## 2. Datenformat

### 2.1 Definitionen zur Datenübertragung

Es gibt keinen festen Wiederholrhythmus für die verschiedenen Gruppentypen (s. 2.2), d.h. es gibt genügend Flexibilität die verschiedenen Informationsarten zeitlich so zu verbinden, daß sie dem Bedarf des Benutzers gerecht werden.

Das gewählte Datenformat besitzt noch 10 freie Gruppenarten, und somit genügend Anpassungsfähigkeit, um auch zukünftige Anwendungen zu berücksichtigen.

Um eine effektive Ausnutzung des Kanals sicherzustellen, werden möglichst wenig verschiedene Informationsarten in einer Gruppe gemischt. Dadurch wird der Anwender nicht gezwungen, durch die Übertragung ungenutzter Informationen Kanalkapazität zu verschwenden.

Die ersten 4 Bit in jedem Block sind dem Gruppentypcode (s. 2.2) zugewiesen, der die Anwendung der Gruppe spezifiziert. Hierdurch ist es möglich, jeden Block einer Gruppe, ohne Bezug zu einem anderen Block, im Empfänger/Decoder zu decodieren. Somit wird bei Übertragungsstörungen die Zugriffszeit für Informationen, die auf mehrere Blöcke aufgeteilt sind, reduziert.

Jeweils der erste Block einer Gruppe beinhaltet die Programmkettenkennung PI.

### PI-Code

Der PI-Code (Programmkettenkennung) besteht aus einem Code (16 Bit), der dem Empfänger eine Unterscheidung zwischen Nationalität, Programmbereich/Sprachbereich und Programm-Code gestattet. Der PI-Code ist nicht für eine direkte Anzeige vorgesehen, er ist jedem Rundfunkprogramm individuell zugeordnet und dient zur Erkennung von Sendern, die das gleiche Programm abstrahlen. Hierdurch wird der Empfänger/Decoder in die Lage versetzt, automatisch eine alternative Frequenz zu suchen, für den Fall, daß beim mobilen Empfang der eingestellte Sender zu schlecht wird.

Nachstehende Codierung gestattet die Unterscheidung von 256 Ländern, 16 Programmbereichen und 16 Programmen.

| Bit | 1 - 8 | Nationalitätskennung |
|-----|-------|----------------------|
| Bit | 9 - 12 | Programmbereichskennung / Sprachbereiche |
| Bit | 13 - 16 | Programm-Code |

Aus der Nationalitätskennung des PI-Code kann das Kurzzeichen für das jeweilige Land abgeleitet und in der Anzeige des Empfängers, dargestellt werden.

### 2.2 Gruppentypen

Der Gruppentypcode - die ersten 4 Bit eines Blocks (Bild 2) - bestimmt die Anwendung der Gruppe. Die bisher definierten Gruppentypen können der nachstehenden Tabelle entnommen werden.

Tabelle 1

| Gruppentypen | | | | | | |
|---|---|---|---|---|---|---|
| Gruppentypcode | | | | | Anwendung | |
| Dezima-Wert | Binär-Code | | | | | |
| | A3 | A2 | A1 | A0 | | |
| 0 | 0 | 0 | 0 | 0 | PS | Name der Programmkette |
| 1 | 0 | 0 | 0 | 1 | RT | Radiotext |
| 2 | 0 | 0 | 1 | 0 | AF | Alternative Frequenzen |
| 3 | 0 | 0 | 1 | 1 | TMC | Traffic Message Channel |
| 4 | 0 | 1 | 0 | 0 | IH | Rundfunkint. Applikat. |
| . | . | . | . | . | | nicht definiert |
| 15 | 1 | 1 | 1 | 1 | | |

### 2.2.1 Gruppentyp 0

**Name der Programmkette PS**

**Schaltinformationen TMC, TP, TA**

Bild 3 zeigt das Datenformat des Gruppentyp 0.

```
                         Block 1

    4           16          1 1    7         7
 |----|----------------|-|-|-------|-------|
 | GT |    PI-Code     |T|T|  PS   |  PS   |
 |    |                |M|P|Zeich.1|Zeich.2|
 |    |                |C| |       |       |
 |    |                | | |       |       |
 |----|----------------|-|-|-------|-------|


                         Block 2

    4   1  3    7       7       7       7
 |----|-|---|-------|-------|-------|-------|
 | GT |T| X |  PS   |  PS   |  PS   |  PS   |
 |    |A|   |Zeich.3|Zeich.4|Zeich.5|Zeich.6|
 |----|-|---|-------|-------|-------|-------|


       Bild 3 - Datenformat des Gruppentyp 0
```

**PS**

Der Name der Programmkette wird für die Anzeige im Empfänger, nach den Codetabellen ISO 646, als 7Bit-Zeichen übertragen (Tabelle 2, Spalte 2-7). Für den Namen sind 6 Zeichen einschließlich Leerzeichen vorgesehen. Die Position der einzelnen Zeichen im Namen ist entsprechend der beigefügten Nummer. Die Übertragung des Namens beginnt mit Zeichen 1. Das höchstwertige Bit jedes Zeichens wird zuerst übertragen. Empfänger mit einer Anzeige von mehr als 6 Zeichen könnten zusätzlich noch die jeweilige Nationalitätskurzzeichen anzeigen (s. 2.1 PI-Code).

**TMC**

TMC (Traffic Message Channel) ist ein Schaltsignal, welches Sender kennzeichnet, die zeitweise codierte Verkehrsnachrichten übertragen. Die Kennung kann für einen automatischen Suchlauf nach TMC-Sender ausgewertet werden.

**TP**

TP (Verkehrsfunkkennung) ist ein Schaltsignal, welches Sender kennzeichnet, die zeitweise gesprochene Verkehrsnachrichten übertragen. Mit Hilfe einer Lampe oder einer entsprechenden Einrichtung kann am Empfänger angezeigt werden, daß das empfangene Programm zu gewissen Zeiten Verkehrsnachrichten überträgt. Die Kennung kann für einen automatischen Suchlauf nach Verkehrsfunksendern ausgewertet werden.

**TA**

TA (Verkehrsdurchsagekennung) ist ein Schaltsignal zur Kennzeichnung, ob eine Verkehrsdurchsage gesendet wird. Das Signal kann im Empfänger folgendermaßen benutzt werden:

- automatisches Einschalten der Verkehrsdurchsage, wenn sich der Empfänger in Empfangsbereitschaft befindet und stummgeschaltet ist;

- automatische Umschaltung von Kassettenwiedergabe auf die Verkehrsdurchsage;

**2.2.2 Gruppentyp 1 Radiotext RT**

Bild 4 zeigt das Datenformat des Gruppentyp 1.

**Block 1**

```
                                              <---------
        4           16        3  1  4        8
      |----|------------------|---|-|----|--------|
      | GT |     PI-Code      | X |T|    |   RT   |
      |    |                  |   |F|    | Zeichen|
      |----|------------------|---|-|----|--------|
                        \                 /
                         Textsegmentadresse

          höchstwertiges Bit    geringstwertiges Bit

                          |----|----|----|----|
                          | C3 | C2 | C1 | C0 |
                          |----|----|----|----|
```

**Block 2**

```
        ---- RT Segment -------------------------->|
        4       8        8        8        8
      |----|--------|--------|--------|--------|
      | GT |   RT   |   RT   |   RT   |   RT   |
      |    | Zeichen| Zeichen| Zeichen| Zeichen|
      |----|--------|--------|--------|--------|
```

**Bild 4 – Datenformat des Gruppentyp 1**

Der Radiotext wird nach den Codetabellen ISO 646 (s. Tabelle 2), mit 8Bit-Zeichen übertragen. Die Übertragung beginnt mit dem höchstwertigsten Bit eines Zeichens.

Die Textsegmentadresse in Block 1 dient zur Einordnung des Textsegmentes, bestehend aus den Zeichen von Block 1 und 2, in eine Anzeige bzw. in einen Speicher. Durch den Bereich der Segmentadresse (0-15) und der in einer Gruppe enthaltenen Zeichen (5), können Radiotexte bis zu einer Länge von 80 Zeichen übertragen werden.

Wird für RT eine Anzeige mit weniger als 80 Zeichen verwendet, so sollte im Empfänger/Decoder ein Speicher vorgesehen werden, so daß Teile der Nachricht nacheinander angezeigt werden können.

Ein Wechsel des Textflag (TF) in Block 1 kennzeichnet die Übertragung eines neuen Radiotextes. Im Empfänger/Decoder wird das Textflag zum Löschen der Anzeigezeige bzw. des Speichers herangezogen.

RT ist vor allem für Heimempfänger mit einer geeigneten Anzeige und für Autoempfänger, z.B. zur Steuerung eines Sprachgenerators, gedacht.

### 2.2.3 Gruppentyp 2 Alternative Frequenzen AF

Bild 5 zeigt das Datenformat des Gruppentyp 2.

```
                            Block 1
     4             16                   8           8
  |------|---------------------|----------|----------|
  |      |                     |          |          |
  |  GT  |      PI-Code        |    AF    |    AF    |
  |      |                     |   Code   |   Code   |
  |------|---------------------|----------|----------|


                            Block 2
     4         8         8          8          8
  |------|----------|----------|----------|----------|
  |      |          |          |          |          |
  |  GT  |    AF    |    AF    |    AF    |    AF    |
  |      |   Code   |   Code   |   Code   |   Code   |
  |------|----------|----------|----------|----------|
```

Bild 5 - Datenformat des Gruppentyp 2

### 2.2.4 Codes für Alternative Frequenzen

**Lang und Mittelwelle**

Lang- und Mittelwellenfrequenzen werden im Raster von 9 kHz durch einen 8Bit-Code dargestellt.

| Nummer | Binär | Code | Trägerfrequenz |
|--------|-------|------|----------------|
| 1 | 0000 | 0001 | 153 kHz |
| . | | . | . |
| 15 | 0000 | 1111 | 279 kHz |
| 16 | 0001 | 0000 | 531 kHz |
| . | | . | . |
| 135 | 1000 | 0111 | 1602 kHz |

**Kurzwelle**

Die Frequenzen der Kurzwelle werden im Raster von 5 kHz durch zwei 8Bit-Code dargestellt. Sie sind dadurch gekennzeichnet, daß der erste 8Bit-Code im Bereich 140-157 liegt. In diesem Fall ist der erste Code mit dem folgenden Code paarweise auszuwerten. Blocküberschreitende Paarungen sind unzulässig.

| Nummer | Binär | Code | Nummer | Binär | Code | Trägerfrequenz |
|--------|-------|------|--------|-------|------|----------------|
| 140 | 1000 | 1100 | 0 | 0000 | 0000 | 3980 kHz |
| . | | . | . | | . | . |
| 157 | 1001 | 1101 | 190 | 1011 | 1110 | 26100 kHz |

**Ultra-Kurzwelle**

Die UKW-Kanäle werden im Raster von 100 kHz durch zwei 8Bit-Code dargestellt. Sie sind dadurch gekennzeichnet, daß der erste 8Bit-Code = 160 ist. In diesem Fall kennzeichnet der Code mit dem folgenden Code einen UKW-

EP 0 561 917 B1

Kanal. Blocküberschreitende Paarungen sind unzulässig.

| Nummer | Binär | Code | Nummer | Binär | Code | Trägerfrequenz |
|--------|-------|------|--------|-------|------|----------------|
| 160 | 1010 | 0000 | 0 | 0000 | 0000 | 87.5 MHz |
| | | | . | | . | . |
| 160 | 1010 | 0000 | 204 | 1100 | 1101 | 107.9 MHz |

**Anzahl und Füllcode**

Der Anzahlcode gibt an, wieviele Frequenzen, ausgenommen Füllcodes, in einer AF-Liste enthalten sind. Eine AF-Liste kann bis zu 31 Frequenzen beinhalten. Der Anzahlcode wird zu Beginn einer AF-Liste übertragen.

Der Füllcode wird zum Belegen von nicht verwendeteten AF-Codes innerhalb der Gruppe benutzt.

| Nummer | Binär | Code | Anwendung |
|--------|-------|------|-----------|
| 136 | 1000 | 1000 | Füll Code |
| 224 | 1110 | 0000 | keine AF |
| 241 | 1110 | 0001 | AF-Liste mit 1 Frequenz |
| . | | . | |
| 255 | 1111 | 1111 | AF-Liste mit 31 Frequenzen |

Die Liste der alternativen Frequenzen gibt Auskunft, welche Sender im gleichen oder benachbarten Empfangsgebieten das selbe Programm ausstrahlen. Empfänger/Decoder mit einem Speicher für AF-Listen können somit die Umschaltzeit auf einen anderen Sender verkürzen.

**2.2.4 Gruppentyp 3**

**Traffic Message Channel TMC**

**Alternative Frequenzen für TMC AFT**

Bild 6 zeigt das Datenformat des Gruppentyp 3.

```
                              Block 1

      4            16           8      3      5
   |------|------------------|--------|----|-------|
   | GT   |     PI-Code      |  AFT   | X  |  TMC  |
   |------|------------------|--------|----|-------|


                              Block 2

      4       8         8         8         8
   |------|--------|--------|--------|--------|
   | GT   |  TMC   |  TMC   |  TMC   |  TMC   |
   |------|--------|--------|--------|--------|


          Bild 6 - Datenformat des Gruppentyp 3
```

9

Das Datenformat berücksichtigt bezüglich der Informationslänge (37 Bit) den Vorschlag der Firma Blaupunkt und den der EBU.

Die alternativen Frequenzen für TMC (AFT) verweisen nur auf Sender mit gleichen codierten Verkehrnachrichten. Diese Sender strahlen nicht dasselbe Tonprogramm ab. Den AFT liegt die gleiche Codierung wie den alternativen Frequenzen (AF) zugrunde. Die Anwendung der AFT ist auf LW- und MW-Frequenzen beschränkt.

### 2.2.5 Gruppentyp 4 Rundfunkinterne Informationen IH

Bild 7 zeigt das Datenformat des Gruppentyp 4.

**Block 1**

| 4 | 16 | 4 | 4 | 8 |
|---|---|---|---|---|
| GT | PI-Code | IH | | IH |

Kanalnummer

höchstwertiges Bit          geringstwertiges Bit

| C3 | C2 | C1 | C0 |
|---|---|---|---|

**Block 2**

| 4 | 8 | 8 | 8 | 8 |
|---|---|---|---|---|
| GT | IH | IH | IH | IH |

**Bild 7 – Datenformat des Gruppentyp 4**

Für IH stehen 48 Bit zur Verfügung, 16 Bit in Block 1 und 32 Bit in Block 2. Der Inhalt der mit IH festgelegten Bits darf von der Rundfunkanstalt selbst bestimmt werden. Dabei scheint ein Datenformat ähnlich wie bei RDS zweckmäßig. Die ersten 4 IH-Bits von Block 1 werden als Kanalnummern 0 bis 15 verwendet. Die verbleibenden 44 Bits werden als 11 HEX-Zeichen betrachtet und stehen zu einer bit-transparenten Datenübertragung zur Verfügung.

Beispiele für die Anwendung von IH:

Programmquellenkennung

Fernsteuerung von Sendernetzen

Personenruf für Betriebspersonal

### Patentansprüche

1. Verfahren zum Übertragen von Zusatzinformationen in einem AM-Rundfunksignal, bei dem empfangsseitig das AM-Rundfunksignal demoduliert, das gewonnene Zusatzinformationssignal decodiert und die decodierte Zusatzinformation für Abstimmungs-, Schalt-, Speicher und/oder Wiedergabezwecke verwendet wird, **dadurch gekennzeichnet**, daß die Zusatzinformationen (P1, PS, AF, AFT, TP, TA, TMC, RT) des Zusatzinformationssignals auf eine zyklisch wiederholte Anzahl von Gruppen zu je zwei gleichlangen Informationsblöcken aufgeteilt sind, daß jeder Informationsblock ein Informationswort und ein Prüfwort aus jeweils einer bestimmten Anzahl von Datenbits aufweist, daß die beiden Prüfworte jeder Gruppe mit unterschiedlichen Offsetwörtern überlagert sind, und daß die Offsetwörter empfangsseitig zur Synchronisation der Informationsblöcke verwendet werden.

2. Verfahren nach Anspruch 1, **dadurch gekennzeichnet**, daß die beiden Informationsworte innerhalb jeder Gruppe eine die jeweilige Gruppe identifizierende Gruppentypenkennung (GT) am Wortanfang enthalten.

3. Verfahren nach Anspruch 1 oder 2, **dadurch gekennzeichnet**, daß in dem ersten Informationsblock jeder Gruppe eine die Programmkette des betreffenden AM-Rundfunksignals identifizierende Programm-Identifikations-(P1)-Kennung enthalten ist.

4. Verfahren nach einem der Ansprüche 1 - 3, **dadurch gekennzeichnet**, daß eine den Namen der Programmkette des betreffenden AM-Rundfunksignals identifizierende Programmservice-(PS)-Kennung in einer ersten Gruppe übertragen wird.

5. Verfahren nach Anspruch 4, **dadurch gekennzeichnet**, daß in derselben Gruppe, in welcher die PS-Kennung übertragen wird, des weiteren Kennungen für die Identifizierung des Senders des betreffenden AM-Rundfunksignals als Sender für codierte Verkehrsnachrichten (TMC-Kennung) und als Verkehrsfunksender (TP-Kennung) und für das eine uncodierte Verkehrsnachricht begleitende Schaltsignal (TA-Kennung) übertragen werden.

6. Verfahren nach einem der Ansprüche 1 - 5, **dadurch gekennzeichnet** daß in einer zweiten Gruppe Radiotextinformationen (RT-Kennung) in Form einer Folge von adressierten Textsegmenten übertragen werden, und daß vor jedem Textsegment ein binäres Löschsignal (TF) übertragen wird, welches seinen Binärzustand ändert, sobald ein bisher übertragener und wiedergegebener Text durch einen neuen Text ersetzt werden soll.

7. Verfahren nach einem der Ansprüche 1 - 6, **dadurch gekennzeichnet**, daß in einer dritten Gruppe Informationen über alternative Frequenzen (AF) von Sendern, die dasselbe Programm wie der momentan empfangene AM-Rundfunksignalsender ausstrahlen, enthalten sind, wobei jede AF-Information eine zusätzliche Kennung für den Wellenbereich KW, MW, UKW) der betreffenden alternativen Frequenz aufweist, und daß die AF-Informationen als zusammenhängende Liste übertragen werden.

8. Verfahren nach einem der Ansprüche 1 - 7, **dadurch gekennzeichnet**, daß in einer vierten Gruppe codierte Verkehrsnachrichten (TMC) sowie Informationen (AFT) über die Frequenzen von alternativen Sendern übertragen werden, welche dieselben codierten Verkehrsnachrichten ausstrahlen, und daß die AFT-Informationen als zusammenhängende Liste übertragen werden.

9. Verfahren nach einem der Ansprüche 1 - 8, **dadurch gekennzeichnet**, daß in einer fünften Gruppe rundfunkinterne Informationen (IH) übertragen werden.

10. Verfahren nach einem der Ansprüche 8 - 9, **dadurch gekennzeichnet**, daß vorrangig die betreffende UKW-Frequenz eingestellt wird, wenn eine AF-Kennung eine zusätzliche Kennung für den UKW-Wellenbereich der betreffenden alternativen Frequenz aufweist.

11. Signal zur Übertragung von Zusatzinformationen in einem AM-Rundfunksignal, welches empfangsseitig für Abstimmungs-, Schalt-, Speicher- und/oder Wiedergabezwecke verwendet wird, **dadurch gekennzeichnet**, daß die Zusatzinformationen (P1, PS, AF, AFT, TP, TA, TMC, RT) auf eine zyklisch wiederholte Anzahl von Gruppen zu je zwei gleichlangen Informationsblöcken aufgeteilt sind, wobei jeder Block ein Informationswort und ein Prüfwort enthält und die beiden Prüfwörter jeder Gruppe mit unterschiedlichen Offsetwörtern überlagert sind, wobei die Offsetwörter empfangsseitig zur Synchronisation dienen.

12. Signal nach Anspruch 11, **dadurch gekennzeichnet**, daß eine Gruppe 94 Bits enthält, wobei jeder der Blöcke 47 Bits enthält, jedes Informationswort 36 Bits enthält und jedes Prüfwort 11 Bits enthält.

13. Signal nach Anspruch 11 oder 12, **dadurch gekennzeichnet**, daß das erste Offsetwort den Wert 01 01 10 10 101 hat und das zweite Offsetwort den Wert 10 11 01 01 011 hat.

14. Empfänger zum Empfang eines in einem AM-Rundfunksignal übertragenen Signals mit Zusatzinformationen nach einem der Ansprüche 11 bis 13 mit Mitteln zur Decodierung der Zusatzinformationen, Mitteln zur Erkennung und Korrektur von Übertragungsfehlern unter Ausnutzung der Prüfwörter und Mitteln zur Blocksynchronisation unter Verwendung der Offsetwörter.

## Claims

1. Method of transmitting auxiliary information in an AM broadcast signal wherein the AM broadcast signal is demodulated at the receiving end, the auxiliary information signal obtained thereby is decoded and the decoded auxiliary information is used for the purposes of tuning, switching, storing and/or reproduction, characterised in that, the auxiliary items of information (PI, PS, AF, AFT, TP, TA, TMC, RT) in the auxiliary information signal are distributed over a cyclically repeated number of groups each incorporating two equally long blocks of information, that each block of information comprises an information word and a check word consisting respectively of a specific number of data bits, that the two check words in each group are mixed with different offset words, and that the offset words are used at the receiving end for synchronising the blocks of information.

2. Method in accordance with Claim 1, characterised in that, the two information words within each group contain a group type identifier (GT) at the beginning of the word, which said identifier identifies the momentary group.

3. Method in accordance with Claim 1 or 2, characterised in that, a program identification (PI) identifier, which identifies the network of stations each transmitting the AM broadcast signal concerned, is contained in the first block of information in each group.

4. Method in accordance with any of the Claims 1 to 3, characterised in that, a program service (PS) identifier, which identifies the name of the network of stations each transmitting the AM broadcast signal concerned, is transmitted in a first group.

5. Method in accordance with Claim 4, characterised in that, further identifiers for identifying the transmitter of the AM broadcast signal concerned as a transmitter of coded traffic messages (TMC identifier) and as a traffic program transmitter (TP identifier) and an identifier for the switching signal (TA identifier) accompanying an uncoded traffic message are transmitted in the same group as that in which the PS identifier is transmitted.

6. Method in accordance with any of the Claims 1 - 5, characterised in that, items of radio text information (RT identifier) are transmitted in a second group in the form of a sequence of addressed segments of text, and that a binary erase signal (TF) is transmitted before each segment of text, said signal altering its binary state as soon as a previously transmitted and reproduced item of text should be replaced by a new item of text.

7. Method in accordance with any of the Claims 1 - 6, characterised in that, items of information regarding alternative frequencies (AF) for the transmitters that radiate the same program as that of the AM broadcast transmitter that is currently being received are contained in a third group, wherein each item of AF information comprises an additional identifier for the wave band SW, MW, VHF of the alternative frequencies concerned, and that the items of AF information are transmitted as correlated lists.

8. Method in accordance with any of the Claims 1 - 7, characterised in that, coded traffic messages (TMC) and items of information (AFT) regarding the frequencies of alternative transmitters that radiate the same coded traffic message are transmitted in a fourth group, and that the items of AFT information are transmitted as correlated lists.

9. Method in accordance with any of the Claims 1 - 8, characterised in that, items of information (IH) that are internal to the broadcast service are transmitted in a fifth group.

10. Method in accordance with any of the Claims 8 - 9, characterised in that, the VHF frequency concerned is tuned in as a matter of priority if an AF identifier comprises an additional identifier for the VHF band for the alternative frequencies concerned.

11. Signal for conveying auxiliary items of information in an AM broadcast signal which is used for the purposes of tuning, switching, storing and/or reproduction at the receiving end, characterised in that, the auxiliary items of information (PI, PS, AF, AFT, TP, TA, TMC, RT) are distributed over a cyclically repeated number of groups each incorporating two equally long blocks of information, wherein each block contains an information word and a check word and the two check words in each group are mixed with different offset words, whereby the offset words are used at the receiving end for synchronising purposes.

12. Signal in accordance with Claim 11, characterised in that, a group contains 94 bits, whereby each of the blocks contains 47 bits, each information word contains 36 bits and each check word contains 11 bits.

13. Signal in accordance with Claim 11 or 12, characterised in that, the first offset word has the value 01 01 10 10 101 and the second offset word has the value 10 11 01 01 011.

14. Receiver for receiving a signal including auxiliary items of information that is transmitted in an AM broadcast signal in accordance with any of the Claims 11 to 13, including means for decoding the auxiliary items of information, means for detecting and correcting transmission errors utilising the check words and means for synchronising the blocks using the offset words.

**Revendications**

1. Un procédé de transmission d'informations supplémentaires avec un signal radio à amplitude modulée par lequel le signal radio à amplitude modulée est démodulé en réception, le signal d'informations supplémentaires obtenu est décodé et les informations supplémentaires décodées sont utilisées pour l'accord, la commutation, la mémorisation et/ou la lecture, **caractérisé en ce que** les informations supplémentaires (PI, PS, AF, AFT, TP, TA, TMC, RT) du signal d'informations supplémentaires sont réparties en deux blocs d'informations de même longueur sur une quantité de groupe renouvelée de façon cyclique. Chaque bloc d'informations comporte un mot d'information et un mot d'essai ayant chacun un nombre de bits de données défini. Les deux mots d'essai de chaque groupe sont dotés de mots de décalage différents et ces mots de décalage sont utilisés côté réception pour la synchronisation des blocs d'informations.

2. Procédé selon la revendication 1, **caractérisé en ce que** les deux mots d'informations au sein de chaque groupe comporte en début de mot un identificateur de type de groupe (GT) permettant d'identifier les différents groupes.

3. Procédé selon la revendication 1 ou 2, **caractérisé en ce que** le premier bloc d'informations de chaque groupe comporte un identificateur de programme (PI) permettant d'identifier la chaîne de programme du signal radio à amplitude modulée concerné.

4. Procédé selon l'une des revendications 1 à 3, **caractérisé en ce qu'**un identificateur de service (PS) permettant d'identifier le nom de la chaîne de programme du signal radio à amplitude modulée concerné est transmis dans un premier groupe.

5. Procédé selon la revendication 4, **caractérisé en ce que** dans le même groupe servant à la transmission de l'identificateur PS sont également transmis d'autres identificateurs de l'émetteur du signal radio à amplitude modulée concerné tels que l'identificateur TMC de diffusion d'informations routières codées ou l'identificateur TP de diffusion d'informations routières parlées et le signal de commutation TA accompagnant les informations routières non codées.

6. Procédé selon l'une des revendications 1 à 5, **caractérisé en ce que** des informations radiotexte (identificateur RT) sont transmises dans un deuxième groupe sous la forme d'une séquence de segments de texte adressés et en ce qu'avant chaque segment de texte un signal d'effacement (TF) est transmis et dont l'état binaire évolue dès qu'un texte déjà transmis et lu doit être remplacé par un autre.

7. Procédé selon l'une des revendications 1 à 6, **caractérisé en ce que** des informations sur les fréquences de remplacement (AF) des émetteurs qui diffusent le même programme que celui du signal radio à amplitude modulée concerné capté actuellement sont contenues dans un troisième groupe et en ce qu'à chaque information AF est associé un identificateur supplémentaire pour la gamme (ondes courtes, moyennes ou ultra-courtes) et en ce que les informations AF peuvent être transmises sous forme de liste groupée.

8. Procédé selon l'une des revendications 1 à 7, **caractérisé en ce que** des informations routières codées (TMC) et des informations (AFT) sur les fréquences des émetteurs de remplacement qui diffusent ces mêmes informations routières codées sont transmises dans un quatrième groupe et en ce que les formations AFT peuvent être transmises sous forme de liste groupée.

9. Procédé selon l'une des revendications 1 à 8, **caractérisé en ce que** des informations radio internes (IH) sont transmises dans un cinquième groupe.

10. Procédé selon l'une des revendications 8 à 9, **caractérisé en ce que** la fréquence d'ondes ultra-courtes concernée est réglée en priorité lorsqu'un identificateur AF présente un identificateur supplémentaire pour la gamme d'ondes ultra-courtes de la fréquence de remplacement concernée.

11. Signal de transmission d'informations supplémentaires dans un signal radio à amplitude modulée utilisé pour l'accord, la commutation, la mémorisation et/ou la lecture, **caractérisé en ce que** les informations supplémentaires (PI, PS, AF, AFT, TP, TA, TMC, RT) du signal d'informations supplémentaires sont réparties en deux blocs d'informations de même longueur sur une quantité de groupe renouvelée de façon cyclique. Chaque bloc d'informations comporte un mot d'information et un mot d'essai et les deux mots d'essai de chaque groupe sont dotés de mots de décalage différents et ces mots de décalage sont utilisés côté réception pour la synchronisation.

12. Signal selon la revendication 11 **caractérisé en ce qu'**un groupe comporte 94 bits et chacun des blocs comporte 47 bits, chaque mot d'information comporte 36 bits et chaque mot d'essai comporte 11 bits.

13. Signal selon la revendication 11 ou 12 **caractérisé en ce que** le premier mot de décalage possède la valeur 01 01 10 10 101 et le second mot de décalage possède la valeur 10 11 01 01 011.

14. Récepteur pour la réception d'un signal avec informations supplémentaires transmis dans un signal radio à amplitude modulée selon l'un des revendications 11 à 13 possédant des capacités de décodage des informations supplémentaires, des capacités de détection et correction des erreurs de transmission à l'aide de mots d'essai et des capacités de synchronisation de blocs à l'aide de mots de décalage.